# EUROPEAN PATENT APPLICATION

(11) **EP 4 834 752 A1**
(43) Date of publication of application: **04.11.2026**
(21) Application number: 25173943.9
(22) Date of filing: 02.05.2025
(51) Int. Cl.: B64C 3/56

(54) **WING STRUCTURE OF AN AIRCRAFT AND ADAPTER MODULE FOR USE IN A WING STRUCTURE**

(71) Applicant: AIRBUS Operations GmbH, 21129 Hamburg (DE)
(72) Inventor: WINKELMANN, Christoph, 21129 Hamburg (DE); MARTENS, Marko, 21129 Hamburg (DE); OEHLMANN, Jan, 21129 Hamburg (DE)
(74) Representative: Isarpatent

(57) **Abstract**

The present invention provides a wing structure (1) of an aircraft, comprising a fixed wing part (10) and a wing tip (11) foldable relative to the fixed wing part (10) about a hinge axis (12) by means of at least one tip actuation unit (2) having at least one geared rotary actuator (3a, b), wherein an adapter module (20) is provided fixed to a fixed wing part (10) structural element with the adapter module (20) having a base plate (21) fixed to the fixed wing part (10) and an interface structure (22) comprising at least one flange (23) for attaching the geared rotary actuators (3a, b) and receiving a hinged lever (25) of the fixed wing part (10), with the at least one flange (23) protruding from the base plate (21) towards the wing tip (11) and having a through hole (26), an adapter module (20) for use in the wing structure (1), an aircraft wing and an aircraft having such wing.

## Description

The present invention pertains to wing structure of an aircraft an adapter module for use in a wing structure an aircraft wing and an aircraft having such wing.

Although it can be used in many applications, the present invention and the problems underlying it are explained in greater detail in relation to aircrafts. However, the devices and method described can likewise be used in vehicles in all sectors of the transport industry, e. g. for road vehicles, for rail vehicles or for watercraft or other installation environments.

There is a trend towards increasingly large passenger aircraft with higher performance efficiency (for example fuel burn reduction), for which it is desirable to have correspondingly large wing spans. However, the maximum aircraft span is effectively limited by airport operating rules which govern various clearances required when manoeuvring around the airport (such as the span and/or ground clearance required for gate entry and safe taxiway usage).

To solve this problem, it is known to provide a passenger aircraft with foldable wings. The foldable wing typically comprises an inner region and an outer region, the outer region being moveable relative to the inner region between a) a flight configuration for use during flight, and b) a ground configuration for use during ground-based operations. In the ground configuration the outer region is moved (typically rotated) relative to the inner region such that the span of the wing is reduced. Thus, the aircraft can still adhere to airport operating rules yet benefit from the larger span in flight. Some systems are using separate actuation devices for the latching, locking and tip actuation function, i. e. for folding the wing tip. In some of these systems separate motors are used for the tip actuation while two motors are used for latching and locking. These systems require more space and are challenging to install in the limited space available in the aircraft wing.

Against this background, it is an object of the present invention to find a wing structure of an aircraft wing allowing a more efficient use of available space and showing reduced complexity during assembly.

This object is achieved by a wing structure of an aircraft having the features of claim 1, an adapter module for use in a wing structure having the features of claim 7, an aircraft wing having the features of claim 13, and an aircraft having the features of claim 15.

According to a first aspect of the invention, a wing structure of an aircraft, comprising a fixed wing part and a wing tip foldable relative to the fixed wing part about a hinge axis by means of at least one tip actuation unit having at least one geared rotary actuators is provided, wherein an adapter module is provided fixed to a wing part structural element with the adapter module having a base plate fixed to the wing part structure and an interface structure comprising at least one flange for attaching the geared rotary actuators and receiving a hinged lever of the fixed wing part, with the flange protruding from the base plate towards the wing tip and having a through hole. It is an idea of the invention to provide an aircraft wing structure with an integrated actuation system for a foldable wing tip. The invention addresses the issue of a secure and efficient integration of a tip actuation unit with at least one geared rotary actuator into the fixed wing part that ensures precise articulation of the foldable wing or wing part, e.g. wing tip and deals with the constraints in terms of space, installation complexity, and precise alignment of actuation components. Advantageously the invention overcomes the space limitation and fulfils the requirements imposed by aircraft wings having foldable wing tip by employing an adapter module that simplifies the installation, enhances structural integrity, and ensures the accurate transfer of actuation forces to the wing tip. The adapter module is designed to be rigidly mounted on the fixed wing part and provides an interface for the geared rotary actuators and associated components. It serves as an intermediary structural element that facilitates precise positioning, secure load distribution, and optimal mechanical coupling between the tip actuation unit and the wing structure. The structure supports dual load paths, ensuring redundancy and fail-safe operation in case of a partial mechanical failure. The adapter module provides precise mounting locations for one or more geared rotary actuators, reducing the complexity of alignment and assembly. Fasteners and through holes are positioned to allow for easy access even when the wing tip is already installed. The adapter module further ensures a secure connection between the tip actuation unit and the aircraft structure, minimizing localized stress concentrations. A flange, in particular a configuration with two parallel flanges with positionally aligned through holes in the flanges, provides a stable mounting interface while maintaining load path integrity across the attachment points. The structure also allows the automatic coupling of an actuation drive shaft when the geared rotary actuators are installed, reducing manual adjustments. The dual load path configuration ensures that mechanical failure of one attachment point does not lead to total actuation failure. The structure thus supports in preventing uncontrolled wing tip motion, ensuring safety during operation and mitigating failure risks. As an advantage, the adapter module integrates into the existing wing structure without requiring excessive modification. The alignment of the adapter relative to the wing's longitudinal axis allows optimal packaging of actuation components. For installation in an aircraft wing, the unit of the invention is preferably aligned with a defined hinge line of the wing and arranged in a plane with the hinge line in the fixed wing part. It can also be arranged at an angle relative to the hinge line, perpendicular or essentially perpendicular to the longitudinal axis of the wing, or parallel or essentially parallel to the fuselage, depending on the configuration and structural design of the aircraft wing.

A further aspect of the invention lies in an adapter module for use in a wing structure of the invention, comprising a base plate and an interface structure comprising at least one flange, with the flange protruding from the base plate and having a through holes. It is an idea of the invention to provide a mechanically stable, precisely aligned, and installation-friendly interface for securing tip actuation components in the wing assembly. This advantageously overcomes the problem of demanding alignment processes during assembly, increased structural stress, and complexity of the structure by providing a rigid and accurately positioned mounting structure that ensures optimal force transmission while minimizing mechanical stress and facilitating straightforward installation. By combining a base plate and an interface structure with a flange, in particular with two parallel flanges having through holes in a in a positionally aligned arrangement, a standardized attachment solution is provided, enabling efficient and reproducible mounting of the actuation system. The base plate provides a robust connection to the fixed wing part, reducing mechanical deformation and stress concentrations. The flange offers predefined mounting positions, ensuring consistent alignment of installed components. The through hole allows for easy insertion of shafts enabling fast and repeatable installation without requiring post-installation adjustments. The integrated interface structure ensures even load transfer between the actuation system and the wing structure, reducing wear and increasing component longevity. The adapter module has the advantage of efficient space utilization and minimizing additional structural weight while maintaining high mechanical integrity.

A further aspect of the invention lies in an aircraft wing having a wing structure according to the invention. It is an idea of the invention to allow for the use of larger wingspan in flight, while the wing tip section can be folded up on the ground to comply with airport regulations by combining actuation and latching/locking into one system. Using the wing structure according to the invention therein results in an improved use of available space and reduced complexity in the assembly process.

A further aspect of the invention lies in an aircraft having an aircraft wing according to the invention. The wing consists of a fixed main section and a hinged wingtip section that is controlled by the actuation and latching and locking system. This allows the wing tip to be fully deployed in flight for aerodynamic efficiency and folded on the ground to meet structural requirements and space constraints.

Advantageous embodiments and further developments are apparent from the further dependent claims and from the description with reference to the figures.

According to an embodiment of the wing structure the geared rotary actuators coupled by a connection element extending through the through holes are arranged on opposite sides of the flanges. Therein the connection element is preferably configured as one of a through shaft, a connection tube and a lever bearing assembly. The connection element is preferably selected depending on structural and functional requirements. Providing a through shaft has the advantage of establishing a rigid mechanical link, ensuring direct torque transmission between the actuators. A connection tube offers weight reduction and mechanical flexibility, while a lever bearing assembly enables controlled force redirection for optimized actuation dynamics. The opposing placement of the geared rotary actuators results even force distribution thus reducing stress concentrations within the adapter module and the wing structure. The through hole in the flange allows for an accurate positioning of the connection element, minimizing mechanical play and ensuring synchronized actuation. The selection of the respective connection element enables customization based on actuator configuration and specifications, load conditions, actuation speed, and available installation space. The predefined alignment of the connection element within the through hole advantageously facilitates installation and servicing without requiring additional structural modifications.

According to an embodiment of the invention, the hinge lever is received in a receiving space defined by the flange. This has the advantage of allowing for a controlled and precisely aligned mounting of the hinge lever within the actuation system, facilitating its pivotal movement relative to the fixed wing part. The receiving space formed by the flange or by or between two parallel flanges therein provides a defined and stable mounting position for the hinge lever, ensuring reliable mechanical coupling within the actuation system.

According to a further embodiment of the invention the at least one gear box, in particular configured as one of a bevel gear box, a hypoid gear box and a worm drive gear box, is provided coupled to the geared rotary actuators with the at least one gear box comprising a drive shaft that extends towards the fixed wing part structure and wherein the gear box is coupled to a shaft protruding at a free end of the geared rotary actuators. The coupling of the gear box to the geared rotary actuators ensures an efficient conversion of actuator motion into controlled rotational movement of the wing tip. The selection of different gear box configurations (bevel, hypoid, or worm drive) allows for adaptation to varying load conditions and space constraints, optimizing mechanical efficiency. The drive shaft extending toward the fixed wing part facilitates a compact and aligned connection, reducing mechanical strain, and ensuring stable operation. The direct coupling between the gear box and the protruding shaft of the actuator minimizes play in the drivetrain, ensuring precise actuation of the wing tip mechanism. The wing structure according to the invention has the advantage of allowing the automatic establishment of a drive shaft connection when the geared rotary actuator is installed. The connection to a drive unit, such as to a hydraulic or electric motor, that is required by the geared rotary actuator can advantageously be established by the gear box. To establish the connection and reduce assembly effort a steady bearing is installed inboard of the hinge rib of the fixed wing part structure. The steady bearing includes a female input shaft that is installed behind an opening in the hinge rib. The gear box installed at the input of the geared rotary actuator, which includes a shaft protruding at a free end of the geared rotary actuator thereby comprises a shaft pointing into the direction of the steady bearing when the geared rotary actuator is installed. The shaft is attached to the geared rotary actuator gear box allowing a swivel movement but is rigidly connected to avoid axial movements. The swivel movement is constrained to deflections which are necessary to allow compensating typical build and deflection tolerances for this application and which are required to allow an installation without damaging the equipment. The inboard shaft end includes a male spline which fits into the female spline of the steady bearing and acts as a move spline. When installing the geared rotary actuator to hinge rib a shaft connection is established which allows to position and attach the geared rotary actuator at minimum effort. It is now required to avoid a simultaneous positioning of the adapter plate and the shaft connection.

According to a further embodiment of the invention, the geared rotary actuators are connected to the flanges by screwing, riveting, or bolting. The fastening configurations provide a rigid and durable attachment, providing structural stability and reliable force transmission between the actuators and the wing structure ensuring that the actuators remain securely fastened under operational loads.

According to a further embodiment of the adapter module of the invention, the base plate comprises means for engagement with the fixed wing part. The engagement means provide a secure mechanical interface, ensuring a precise and stable connection between the adapter module and the wing structure. The engagement means facilitate accurate positioning, controlled load distribution, and efficient force transmission while allowing for reducing assembly effort. By ensuring efficient mechanical coupling, the engagement means enable even load distribution across the wing structure, minimizing stress concentrations and enhancing durability.

According to a further embodiment of the invention, the means for engagement are configured as dowels protruding from a base plate side opposite to the interface structure, with the dowels being receivable in corresponding dowel mountings provided in the fixed wing part. The engagement through dowels provides a predefined positioning interface, facilitating repeatable and accurate installation while allowing for controlled load transfer and structural reinforcement. This configuration ensures that the adapter module remains securely positioned within the wing structure under operational loads and stresses. The predefined dowel mountings allow for quick and reliable installation in the limited space available in the aircraft wing structure. The positive-fit engagement of the dowels in the mountings also provides high resistance against operational vibrations and mechanical shocks.

According to a further embodiment of the invention the base plate comprises threaded holes, holes with threaded inserts or barrel nuts for receiving screws or tension bolts provided in the fixed wing part for engagement with the base plate for fixing the base plate to the fixed wing part. The use of threaded fastening elements provides a high-strength connection, ensuring that the adapter module remains firmly secured under operational loads and dynamic forces thus reducing mechanical deflection and undesired movement. Additionally, the integration of threaded inserts or barrel nuts allows for optimized load transfer and simplified maintenance procedures.

According to a further embodiment of the invention threaded studs are provided at the base plate and insertable in the fixed wing part for engagement with a threaded counter element, in particular a threaded nut, for fixing the base plate to the fixed wing part. This alternative or supplementary configuration ensures a mechanically secure and load-bearing attachment, allowing for precise positioning and reliable fixation of the adapter module within the wing structure.

According to a further embodiment of the invention, the adapter module comprises a longitudinal separation into a first module half and a second module half connected to the first module half, wherein the module halves are connected to each other by one of gluing, welding, and bolting. This configuration enhances mechanical reliability and structural resilience by ensuring that each module half remains securely attached while maintaining the required structural integrity and load distribution characteristics. The connection method between the module halves is selected based on mechanical strength, operational loads, and crack propagation resistance to prevent failure modes such as complete detachment due to material fatigue or cracking. In particular, the dual-plate configuration allows for a fail-safe design, ensuring that in the event of structural damage to one module half, the other remains intact, thereby preserving the mechanical coupling of the actuation system. The dual-plate configuration mitigates the risk of failure, ensuring that cracks do not propagate across the entire adapter module, thereby maintaining the attachment of the actuation system in case of localized damage.

The mechanical connection between the module halves creates a dual load path, ensuring that even if one module half sustains damage, the actuation function remains operational, preventing an uncontrolled failure scenario. The connection options - gluing, welding, or bolting - allows for adaptation to different mechanical and manufacturing requirements, ensuring compatibility with weight constraints, structural loads, and maintenance requirements. By distributing mechanical loads across two interconnected module halves, stress concentrations are minimized, reducing the likelihood of fatigue-induced cracking, and enhancing the long-term durability of the adapter module.

The invention will be explained in greater detail with reference to exemplary embodiments depicted in the drawings as appended.
- Fig. 1: depicts a perspective view of a wing structure according to an embodiment of the invention;
- Fig. 2: depicts a perspective view of an adapter module according to an embodiment of the invention;
- Fig. 3: depicts a perspective view of an adapter module installed in a wing structure according to an embodiment of the invention; and
- Fig. 4: depicts a perspective view of an adapter module according to a further embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

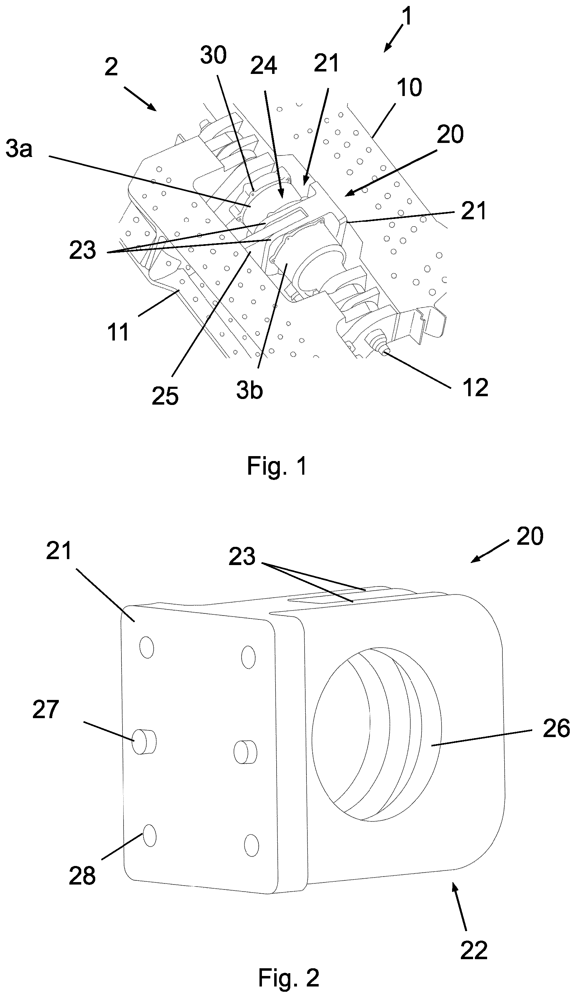

Fig. 1 depicts a perspective view of a wing structure 1 according to an embodiment of the invention. The illustration focusses on the attachment configuration of a tip actuation unit 2 between the fixed wing part 10 and the foldable wing or foldable wing part, such as for example a foldable wing tip 11.

In Fig. 1 an embodiment with a foldable wing tip 11 is illustrated without limiting the invention thereto. The wing structure 1 comprises a fixed wing part 10 and a foldable wing tip 11, which is pivotally movable relative to the fixed wing part 10 about a hinge axis 12. To enable controlled movement of the foldable wing tip 11, a wing tip actuation unit 2 is provided, comprising two geared rotary actuators 3a, b that generate the required torque for actuation. An adapter module 20 is fixed to the fixed wing part 10, extending perpendicular to the longitudinal axis L of the wing. The adapter module 20 comprises a base plate 21, which is rigidly attached to the fixed wing part 10 to provide a secure and stable connection. Extending from the base plate 21 is an interface structure 22 comprising parallel flanges 23, which protrude from the base plate 21 toward the foldable wing tip 11. The flanges 23 are configured to serve as mounting points for the geared rotary actuators 3a, b and to define a receiving space 24 for a hinged lever 25 of the foldable wing tip 11.

One of the geared rotary actuator 3a is coupled to a gear box 30, which is connected to an actuation shaft (not shown) extending through the through holes 26 in the flanges 23. The gear box 30 enables torque transmission from a drive to the geared rotary actuators 3a, b, to control rotational movement of the hinged lever 25 and foldable wing tip 11. The hinged lever 25 is positioned within the receiving space 24 between the flanges 23 and is pivotally supported therein. The lever 25 interacts with the foldable wing tip 11 to transfer actuation forces, ensuring synchronized and precise movement about the hinge axis 12. The through holes 26 (cf. Fig. 2) in the flanges 23 are aligned to accommodate the actuation shaft, thereby ensuring accurate alignment and efficient force transmission.

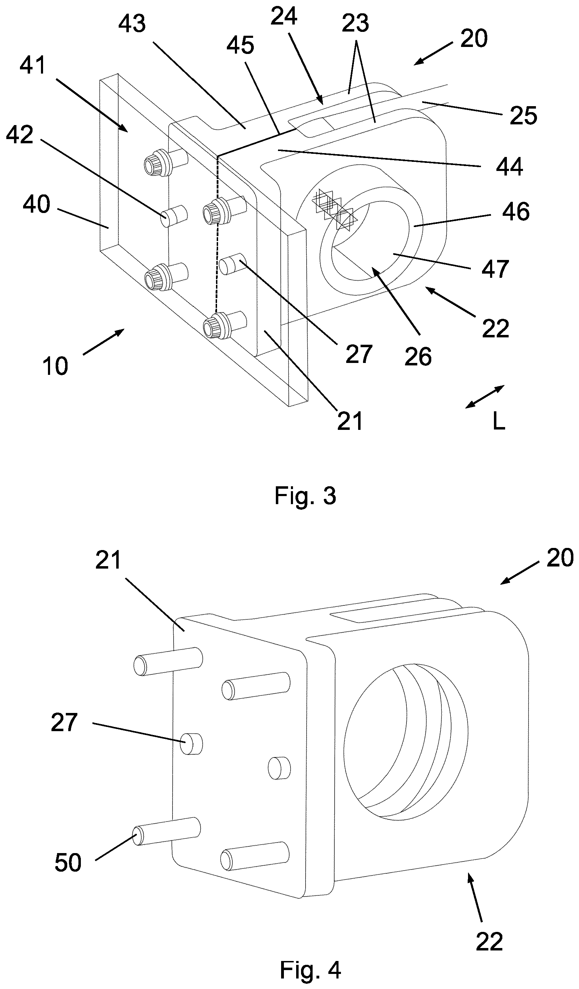

Fig. 2 depicts a perspective view of an adapter module 20 according to an embodiment of the invention. The adapter module 20 is configured for attachment to a fixed wing part 10 and comprises a base plate 21 and an interface structure 22 extending therefrom. The base plate 21 is provided with engagement means to facilitate precise alignment and secure fixation of the adapter module 20 to the fixed wing part 10. In this embodiment, the engagement means are configured as dowels 27 protruding from a surface of the base plate 21 opposite to the interface structure 22. The dowels 27 are designed to be received in corresponding dowel mountings 42 (cf. Fig. 3) provided in the fixed wing part 10, ensuring a predefined positioning interface for the adapter module 20. The base plate 21 further comprises fastening holes 28, which are arranged to accommodate screws or bolts for securing the adapter module 20 to the fixed wing part 10. Through holes 26 that are aligned with the hinge axis 12 of the wing tip actuation system in the mounted position in the wing structure 1 are provided in the interface structure 22, comprising to parallel aligned flanges 23. This through holes 26 serves as a mounting point for an actuation shaft or a structural connection element. The dowel-based engagement in combination with the fastening holes 28 ensures precise alignment, stable attachment, and controlled load distribution between the adapter module 20 and the fixed wing part 10 as the predefined positioning of the dowels 27 facilitates rapid and repeatable assembly while minimizing the risk of misalignment. The combination of dowel engagement and additional fasteners provides a mechanically reinforced and vibration-resistant connection.

Fig. 3 depicts a perspective view of an adapter module 20 installed in a wing structure 10 according to an embodiment of the invention. The adapter module 20 is mounted to a rib 40 of the fixed wing part 10, providing a rigid and precisely aligned attachment interface for actuation components of the foldable wing tip system. The rib 40 is aligned perpendicular to the longitudinal axis L of the aircraft wing as a structural element of the fixed wing part 10. The base plate 21 of the adapter module 20 is secured to the rib 40 by attachment means 41, such as bolts or tension screws, ensuring a mechanically stable connection. For precise alignment and additional load distribution, dowels 27 protrude from the base plate 21 and are received in corresponding dowel mountings 42 provided in the rib 40 of the fixed wing part 10. This predefined engagement mechanism facilitates positioning of the adapter module 20 preventing misalignment during installation. The adapter module 20 is designed in a split configuration, comprising a first module half 43 and a second module half 44, which are joined together along a split line 45. The connection between the module halves 43, 44 can be realized by gluing, welding, or bolting, ensuring structural integrity and load-bearing capacity. The interface structure 22 of the adapter module 20 houses a hinged lever 25, which is positioned within a receiving space 24 defined by parallel flanges 23. The hinged lever 25 is pivotally supported on a connection element 46, which extends through the through holes 26 in the flanges 23. The connection element 46 is configured to provide rotational coupling between the geared rotary actuators 3a, b and the hinged lever 25. For this purpose, the connection element 46 is provided with a female spline 47, which is designed to engage with a male spline (not shown) on the shafts of the geared rotary actuators 3a, b, or vice versa, ensuring an efficient torque transmission.

Fig. 4 depicts a perspective view of an adapter module 20 according to a further embodiment of the invention. The adapter module 20 is configured for attachment to the fixed wing part 10 and comprises a base plate 21 and an interface structure 22 extending therefrom. In this embodiment, the adapter module 20 is secured to the fixed wing part 10 using threaded studs 50, which are either directly machined into the base plate 21 or configured as separate fastening elements. The threaded studs 50 extend from the base plate 21 and are designed to pass through corresponding mounting holes in the fixed wing part 10, where they are secured using attachment means 41, such as nuts shown in Fig. 3. This configuration enables a reliable and load-bearing connection between the adapter module 20 and the fixed wing part 10 while ensuring efficient assembly and maintenance procedures. To prevent unintended loosening of the attachment means 41, additional locking features may be applied. These can include wire-locking mechanisms, lock plates, or self-locking threads, ensuring that the fastening elements remain securely engaged under operational conditions, including vibrations and dynamic loads. The adapter module 20 further comprises dowels 27, which provide a precise alignment interface by engaging with corresponding dowel mountings 42 in the fixed wing part 10 (cf. Fig. 3). This ensures that the adapter module 20 is positioned correctly before final tightening of the attachment means 41, reducing the risk of misalignment.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 1: wing structure
- 2: tip actuation unit
- 3a, b: geared rotary actuator
- 10: fixed wing part
- 11: wing tip
- 12: hinge axis
- 20: adapter module
- 21: base plate
- 22: interface structure
- 23: flange
- 24: receiving space
- 25: lever
- 26: through hole
- 27: dowels
- 28: hole
- 30: gearbox
- 40: rib
- 41: attachment means
- 42: dowel mounting
- 43: first module half
- 44: second module half
- 45: split line
- 46: connection element
- 47: female spline
- 50: threaded stud
- L: longitudinal axis

## Claims

1. Wing structure (1) of an aircraft, comprising a fixed wing part (10) and a wing tip (11) foldable relative to the fixed wing part (10) about a hinge axis (12) by means of at least one tip actuation unit (2) having at least one geared rotary actuator (3a, b), wherein an adapter module (20) is provided fixed to a fixed wing part (10) structural element with the adapter module (20) having a base plate (21) fixed to the fixed wing part (10) and an interface structure (22) comprising at least one flange (23) for attaching the geared rotary actuators (3a, b) and receiving a hinged lever (25) of the fixed wing part (10), with the at least one flange (23) protruding from the base plate (21) towards the wing tip (11) and having a through hole (26).

2. Wing structure (1) according to claim 1, wherein the at least one geared rotary actuator (3a, b) coupled by a connection element (46) extending through the through hole (26) are arranged on opposite sides of the flange (23).

3. Wing structure (1) according to claim 2, wherein the connection element (46) is configured as one of a through shaft, a connection tube and a lever bearing assembly.

4. Wing structure (1) according to any one of claims 1 to 3, wherein the hinge lever (25) is received in a receiving space (24) defined by the flange (23).

5. Wing structure (1) according to any one of claims 1 to 4, wherein at least one gear box (30), in particular configured as one of a bevel gearbox, a hypoid gear box and a worm drive gearbox, is provided coupled to the at least one geared rotary actuator (3a, b) with the at least one gear box (30) comprising a drive shaft that extends towards the fixed wing part (10) and wherein the gear box (30) is coupled to a shaft protruding at a free end of the geared rotary actuators (3a, b).

6. Wing structure (1) according to any one of claims 1 to 5, wherein at least one gear box (30), in particular configured as one of a bevel gearbox, a hypoid gear box and a worm drive gearbox, is provided coupled to the fixed wing part (10) with the at least one gear box (30) comprising a drive shaft mounted inboard of the fixed wing part (10) and extending towards the at least one geared rotary actuator (3a, b) and wherein the gear box (30) is coupled to a shaft protruding at a free end of the geared rotary actuators (3a, b).

7. Wing structure (1) according to claim 6, wherein for establishing the connection to the gear box (30) a steady bearing is provided inboard and installed on a hinge rib of the fixed wing part (10) structure with the steady bearing preferably including a female input shaft that is installed in particular behind an opening in the hinge rib, with the gear box (30) being installed at the input of the geared rotary actuator (3a, b), including a shaft protruding at a free end of the geared rotary actuator (3a, b) thereby comprises a shaft pointing into the direction of the steady bearing when the geared rotary actuator (3a, b) is installed.

8. Wing structure (1) according to any one of claims 1 to 7, wherein the geared rotary actuators (3a, b) are connected to the flanges (23) by screwing, riveting, or bolting.

9. Adapter module (20) for use in a wing structure (1) according to any one of claims 1 to 8, comprising a base plate (21) and an interface structure (22) comprising at least one flange (23), with the at least one flange (23) protruding from the base plate (21) and having a through a hole (26).

10. Adapter module (20) according to claim 9, wherein the base plate (21) comprises means for engagement with the fixed wing part (10).

11. Adapter module (20) according to claim 10, wherein the means for engagement are configured as dowels (27) protruding from a base plate side opposite to the interface structure (22), with the dowels (27) being receivable in corresponding dowel mountings (42) provided in the fixed wing part (10).

12. Adapter module (20) according to any one of claims 9 to 11, wherein the base plate (21) comprises threaded holes (28), holes with threaded inserts or barrel nuts for receiving screws or tension bolts provided in the fixed wing part (10) for engagement with the base plate (21) for fixing the base plate (21) to the fixed wing part (10).

13. Adapter module (20) according to any one of claims 9 to 12, wherein threaded studs (50) are provided at the base plate (21) and insertable in the fixed wing part (21) for engagement with a threaded counter element, in particular a threaded nut, for fixing the base plate (21) to the fixed wing part (10).

14. Adapter module (20) according to any one of claims 9 to 13, wherein the adapter module (20) comprises a longitudinal separation into a first module half (43) and a second module half (44) connected to the first module half (43), wherein the module halves (43, 44) are connected to each other by one of gluing, welding, and bolting.

15. Aircraft wing having a wing structure (1) according to any one of claims 1 to 8.

16. Use of an adapter module (20) according to any one of 9 to 14 in a wing structure (1) according to any one of claims 1 to 8.

17. Aircraft having an aircraft wing according to claim 16.
